# EUROPEAN PATENT SPECIFICATION

(11) **EP 3 105 153 B1**
(45) Date of publication and mention of the grant of the patent: **25.09.2019**
(21) Application number: 15710905.9
(22) Date of filing: 09.02.2015
(51) Int. Cl.: B65G 17/08

(54) **CONVEYOR FOR TRANSPORTING PRODUCTS**
FÖRDERER ZUM TRANSPORT VON PRODUKTEN
TRANSPORTEUR POUR LE TRANSPORT DE PRODUITS

(30) Priority: 14.02.2014 IT BO20140074
(43) Date of publication of application: 21.12.2016
(73) Proprietor: BETT SISTEMI s.r.l., 41012 Carpi (Modena) (IT)
(72) Inventor: BETTATI, Tienno, 42015 Correggio (Reggio Emilia) (IT)
(74) Representative: Fanzini, Valeriano
(86) International application number: PCT/IB2015/050961
(87) International publication number: WO 2015/121788

(56) References cited:
- EP-A1- 1 092 656
- DE-A1- 2 941 145
- DE-A1- 10 024 121
- DE-U1- 29 612 735
- JP-A- 2004 269 259
- JP-A- 2004 269 259
- US-A- 4 597 492
- US-A- 4 597 492
- US-A1- 2004 050 672
- US-A1- 2004 050 672
- US-B1- 6 347 699

## Description

### Technical field

This invention relates to a conveyor of the type with articulated links for transporting products.

### Background art

Known in the prior art are conveyors of the type with articulated links for transporting products, in a working zone, plant or industrial machine and wherein each link of the conveyor comprises a transversal portion defining the product supporting surface, and a longitudinal portion, defining corresponding means for articulation to the adjacent links.

In the prior art conveyors the respective product supporting portion of the respective link comprises a first and a second plurality of protrusions extending longitudinally towards opposite and adjacent links, the protrusions being separated from each other by corresponding longitudinal gaps, or indentations, configured to receive the corresponding protrusions of the adjacent links of the conveyor of the respective link upstream and of the respective link downstream. Document US4,597,492 discloses a conveyor according to the preamble of claim 1.

A problem seen with conveyors which use these type of links with longitudinal protrusions relates to a still excessive presence of spaces or openings between the links, in which the products conveyed, or parts thereof, may fall, or into which the fingers or other parts of the operators controlling the plant, machine or conveyor can be inserted.

More specifically, conveyors are used in the pharmaceutical industry which transport blister packs, containing the respective pharmaceutical product, which have increasingly large dimensions, and which require the use of conveyors having increasingly larger links, which are, however, very heavy and noisy.

The need is felt in the field of having conveyors, in particular of the type with articulated links, which make it possible to achieve high speeds.

The field also feels the need for conveyors which are not very noisy, with obvious advantages in terms of health and safety of the work environments in which the conveyors are used.

Moreover, the trade also feels the need for conveyors which allow driving powers to be used which are as low as possible.

### Aim of the invention

This invention proposes a novel solution, alternative to the solutions known up to now and which can overcome one or more of the above mentioned disadvantages and/or meet one or more of the requirements mentioned in or inferable from the above.

A conveyor is therefore provided of the type with articulated links for transporting products, in a working zone, plant or industrial machine, according to the appended claim 1.

In this way, there is a configuration of protrusions which is sufficiently dense to be make minimum spaces between the links, with obvious advantage with regard to the risk of insertion between the links of pieces or parts of pieces, or insertion between these of the fingers or other parts of the operators for monitoring the plant.

### Brief description of the drawings

These and other innovative aspects are set out in the appended claims and the technical features and advantages are also apparent from the detailed description which follows of non-limiting example embodiments of it with reference to the accompanying drawings, in which:
- Figure 1A is a perspective view from above of a first preferred embodiment of the link according to this invention;
- Figure 1B is a perspective view from below of the first preferred embodiment of the link according to this invention;
- Figure 1C is a view from above of a curved stretch of a conveyor belt using the first preferred embodiment of the link according to this invention;
- Figure 1D is a view from above of a rectilinear stretch of the conveyor belt using the first preferred embodiment of the link according to this invention;
- Figure 1E is a perspective view of the assembling between links of the first preferred embodiment of the link according to this invention;
- Figure 2 is a plan view from above of the first preferred embodiment of the link according to this invention;
- Figure 3 is a front view of the first preferred embodiment of the link;
- Figure 4 is a side view of the first preferred embodiment of the link;
- Figure 5 is a plan view from below of the first preferred embodiment of the link;

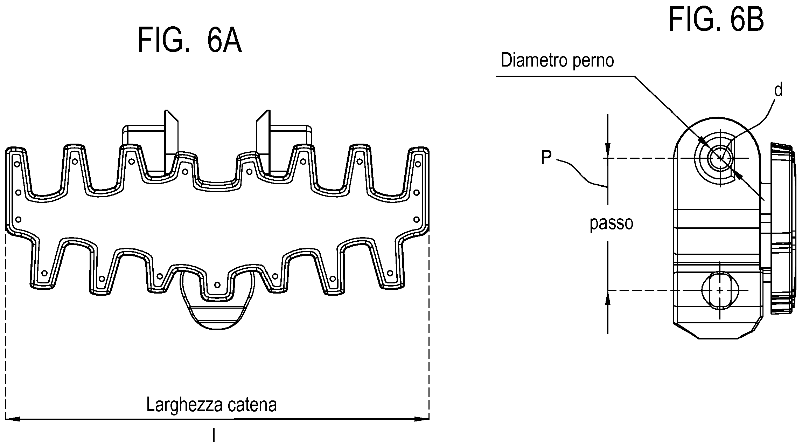

- Figures 6A to 6C show in particular the link of the first preferred embodiment highlighting the reference quantities of the link.

### Detailed description of preferred embodiments of the invention

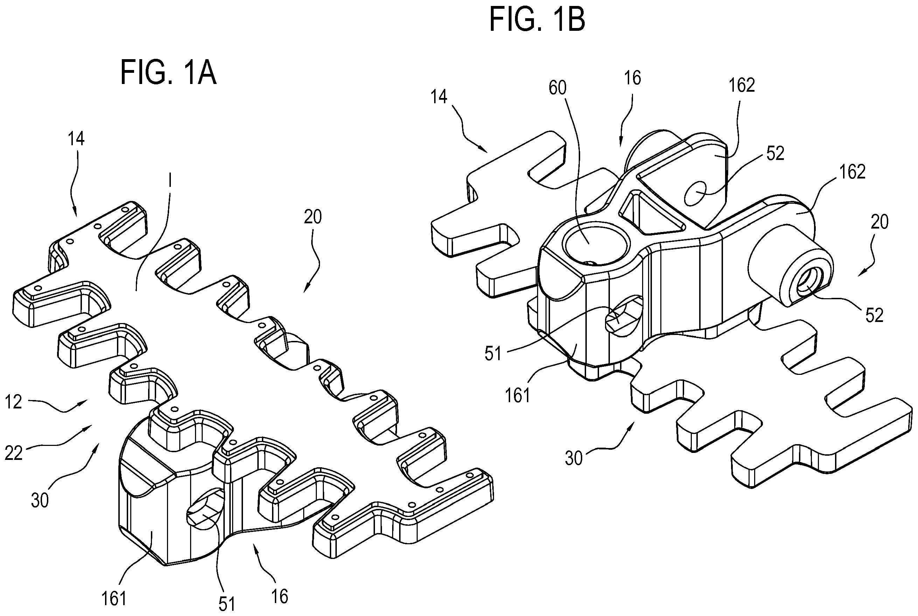

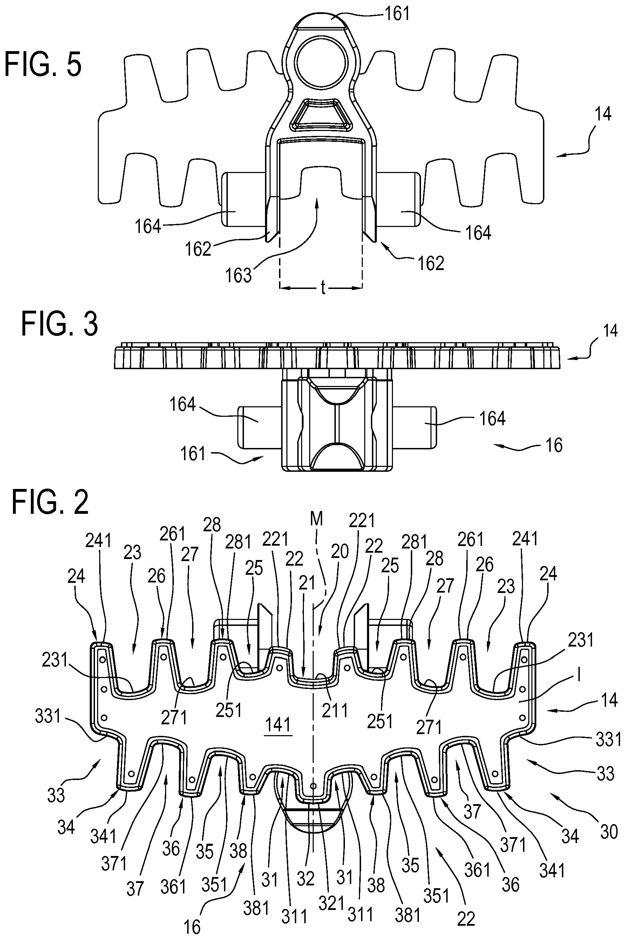

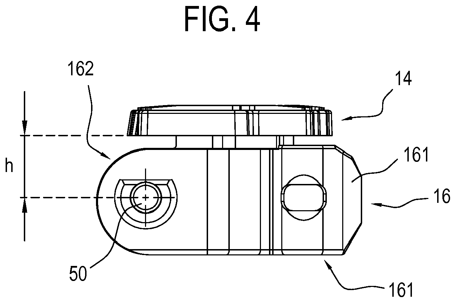

Figures 1A to 5 illustrate a first preferred embodiment 12 of the link for a conveyor of the type with articulated links for transporting products in a respective working zone, plant or industrial machine.

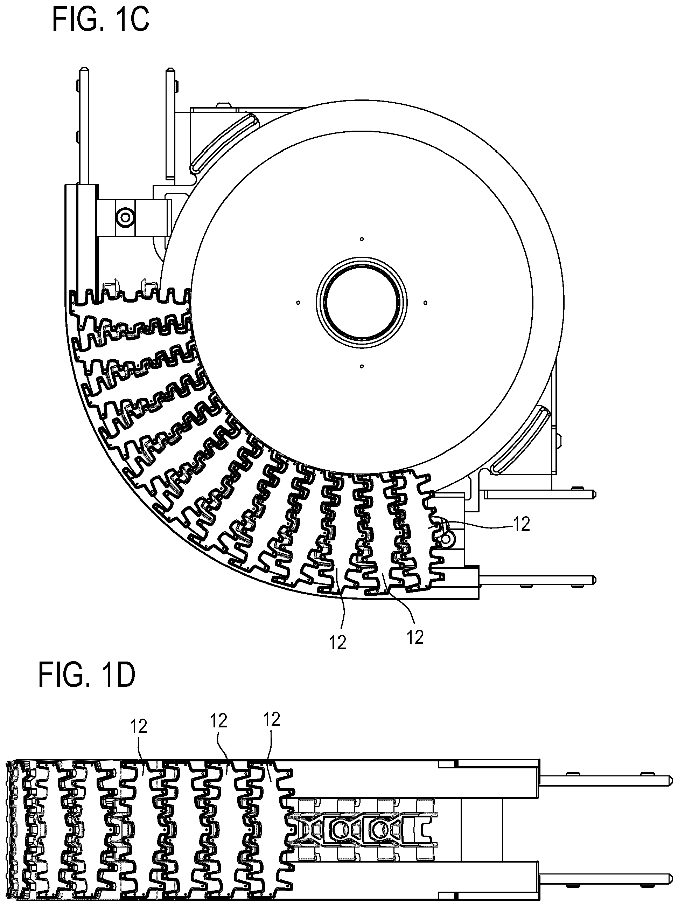

This conveyor, in particular, as may be inferred from Figures 1C and 1D, comprises a respective belt with articulated links which is conveyed along a respective endless path having straight and curved stretches and which has a respective positive stretch for transporting the product and a return stretch, normally extending beneath the positive transport stretch.

Each link 12 of the conveyor is articulated to corresponding adjacent links, respectively longitudinally upstream and downstream of the link 12, and comprises a respective portion 14, which defines the product supporting surface, and a portion 16 defining means for articulation to the adjacent links of the conveyor.

More specifically, the portion 14 for supporting the product is located, in particular in the positive feed stretches, above, that is outside the closed-loop path of the belt, whilst the articulation portion 16 is located below the supporting portion 14 of the product, that is, inside it.

More specifically, the respective product supporting portion 14 comprises a first and a second plurality of protrusions, respectively 20 and 30, extending longitudinally towards opposite and adjacent links of the conveyor.

As illustrated, the protrusions 20, 30 are separated from each other by corresponding longitudinal gaps, or indentations, 21, 31 configured to receive the corresponding protrusions of the longitudinally adjacent links of the conveyor.

The second plurality of protrusions 20, on a respective longitudinal side of the link, are longitudinally offset with respect to the protrusions 30, which are provided on the opposite side of the same link.

In this first preferred embodiment, the link, in particular the product supporting portion 14 thereof, has a configuration which is symmetrical about the longitudinal centre line "M" of the same link.

As illustrated, in practice, the first plurality of longitudinal protrusions 30, that is, those facing towards a respective adjacent link upstream, according to the normal feed direction of the conveyor, comprise a respective central protrusion 32 and respective and opposite first and second lateral protrusions 34, 34.

According to the invention, in the first plurality of protrusions 30, between the central protrusion 32 and each of the respective lateral protrusions 34, there are corresponding first intermediate protrusions, respectively outer 36.According to the invention, in the first plurality of protrusions 30, between the central protrusion 32 and each of the respective lateral protrusions 34, there are corresponding second intermediate protrusions, respectively inner 38.

In this way, there is a configuration of the protrusions which is quite dense and such as to define minimum spaces between the links with obvious advantages in terms of the risk of operators inserting pieces or parts of pieces between the links, or insertion of the fingers or other parts of the operators for monitoring the conveyor.

Accordingly, the second plurality of protrusions 20, that is, those which face towards a respective and adjacent link downstream of the conveyor, according to the normal feed direction of the conveyor, comprise first and second central protrusions 22, 22 and a first and a second end protrusion 24, 24, which are located at the lateral ends of the supporting portion 14, that is, at the transversal ends of the supporting portion 14 which are opposite each other.

According to the invention, in the second plurality of protrusions 20, between each of the central protrusions 22 and the respective lateral protrusions 24, there are first intermediate protrusions, respectively outer 26.According to the invention, in the second plurality of protrusions 20, between each of the central protrusions 22 and the respective lateral protrusions 24, there are second intermediate protrusions, respectively inner 28.

In this way, there is a configuration of the protrusions which is sufficiently dense to define minimum spaces between the links with obvious advantages in terms of the risk of operators inserting pieces or parts of pieces between the links, or insertion of the fingers or other parts of the operators for monitoring the conveyor.

Further advantageously, the respective intermediate protrusion, in particular the outer and/or inner protrusion 26, 28, of the second plurality of protrusions 20, extends longitudinally beyond the corresponding lateral end protrusion 24 and/or the corresponding central protrusion 22.

In practice, the end, or transversal end face, 261, 281, of the intermediate protrusions 26, 28 is positioned longitudinally, in the direction of the respective and opposite adjacent link, beyond the end, or transversal end face, 241 of the lateral end protrusion 24, and beyond the end, or transversal end face, 221 of the corresponding central protrusion 22.

In this way, there is a large covering of the spaces between the links at the intermediate zones of the two transversal half-parts of the supporting plate 14.

Advantageously, the first and second outer and inner intermediate protrusions 26, 28 of the second plurality of protrusions 20 have respective longitudinal ends 261, 281, which are transversely paired or substantially paired with each other.

In this way, it is possible to obtain a large reduction of the spaces between the links at the intermediate zone of the two transversal half-parts of the supporting plate 14 of the products.

Also, the respective lateral end protrusion 24, of the second plurality of protrusions 20, extends longitudinally beyond the corresponding central protrusion 242 of the plurality of protrusions 20.

As illustrated, the central protrusion 32 of the first plurality of protrusions 30 extends longitudinally beyond the corresponding longitudinal protrusions, respectively 34, 34, 36, 36, 38, 38 of the selfsame first plurality of protrusions 30.

Advantageously, the respective outer intermediate protrusion 36, the first plurality of protrusions 30, extends longitudinally beyond the corresponding lateral protrusion 34 and/or the corresponding inner intermediate protrusion 38 in particular, as illustrated, beyond both the lateral protrusion 34 and the inner intermediate protrusion 38.

In turn, the inner intermediate protrusion 38 of the first plurality of protrusions 30 extends longitudinally beyond the corresponding lateral protrusion 34.

In practice, as illustrated, the respective protrusions of the first plurality of protrusions 30, have a main central protrusion 32 having a corresponding transversal face, or end, 321, which is positioned in the direction of the opposite and adjacent link of the conveyor, beyond the transversal end faces, or end, 341, 361, 381 of the other protrusions 34, 36, 38 of the supporting portion 14, which are located on the same side of the latter.

Also, the outer intermediate protrusion 36 has the respective transversal end surface, or end, 361, which is longitudinally positioned, in the direction of the opposite and adjacent link, beyond the end, or transversal face, 381 of the inner intermediate protrusion 38, as well as beyond the end, or transversal face 341 of the corresponding lateral protrusion 34.

Also, the transversal end face, or end, 381 of the inner intermediate protrusion 38 is longitudinally positioned, in the direction of the opposite and adjacent link, beyond the end, or transversal end face 341 of the corresponding lateral protrusion, 34.

The central protrusions 22, 22 of the second plurality of protrusions 20 have respective transversal end faces 221, 221 which are inclined and convergent on each other in the direction of the opposite longitudinal end of the link, that is, convergent in the normal feed direction of the conveyor.

Advantageously, the indentations for insertion of the protrusions of opposite and adjacent link at the second plurality of protrusions 20 comprise a large central indentation 21, which is provided between the central protrusions 22, 22, and the corresponding lateral indentations 23, 23, which are provided between the corresponding lateral protrusions 24 and the outer intermediate protrusions 26.

Also, advantageously, the indentations for insertion of the protrusions of the opposite and adjacent link at the second plurality of protrusions 20 comprise respective first 25 and second intermediate indentations 27, respectively outer and inner, which are respectively provided between the corresponding central protrusion 22 and the respective inner intermediate protrusions 28, and between the respective outer and inner intermediate protrusions 26, 28.

Also, advantageously, the indentations for insertion of the protrusions of the adjacent link at the first plurality of protrusions 30 comprise a first and a second central indentation 31, 31, which are provided between the central protrusion 32 and the corresponding inner intermediate protrusions 38, 38, as well as lateral end indentations 33, 33, which are provided on the outside of the respective lateral protrusion 34, 34.

Further advantageously, the indentations for insertion of the protrusions of the adjacent link, at the first plurality of protrusions 30, comprise respective first 35 and second intermediate indentations 37, respectively outer and inner, which are respectively provided between the corresponding outer and inner intermediate protrusions 36, 38 and between the respective outer intermediate protrusion 38 and the corresponding lateral protrusion 34.

The indentations at the first and the second plurality of protrusions are defined by a respective bottom face and by lateral longitudinal faces of the protrusions which delimit the respective indentation.

More specifically and advantageously, the bottom face 251 of the respective inner intermediate indentation 25 at the second plurality of protrusions 20, extends longitudinally, in the direction of the opposite and adjacent link, beyond the bottom face 211 of the corresponding central indentation 21 and/or the bottom face 271 of the outer intermediate indentation 27 and/or the bottom face 131 of the lateral indentation 23, and preferably, as illustrated, longitudinally beyond each of the bottom walls of the other indentations at the second plurality of protrusions 20.

Also, as may be inferred, the bottom face 211 of the corresponding central indentation 21 at the second plurality of protrusions 20, extends longitudinally in the direction of the opposite and adjacent link, beyond the bottom face 271 of the outer intermediate indentation 27 and/or the bottom face 231 of the lateral indentation 23, in particular, as illustrated, it extends longitudinally beyond both of the bottom faces 271, 231 of these.

Moreover, the bottom face 271 of the outer intermediate indentation 27, at the second plurality of protrusions 20, extends longitudinally, in the direction of the opposite and adjacent link, beyond the bottom face 231 of the respective lateral indentation 23.

Advantageously, the bottom face 311 of the respective central indentation 31, 31, at the first plurality of protrusions 30, extends longitudinally, in the direction of the opposite and adjacent link, beyond the bottom face 351 of the inner intermediate indentation 35 and/or the bottom face 371 of the outer intermediate indentation 37 and/or the bottom face 331 of the respective lateral end indentation 33.

More specifically, as illustrated, the bottom face 311 of the respective central indentation 21, 31 extends beyond the bottom faces 351, 371 and 331 of the remaining indentations provided at the first plurality of protrusions 30.

Advantageously, the bottom face 351 of the inner intermediate indentation 35, at the first plurality of protrusions 30, extends longitudinally, in the direction of the opposite and adjacent link, beyond the bottom face 371 of the outer intermediate indentation 37 and/or the bottom face 331 of the respective outer lateral indentation 33, in particular of both the bottom faces 371 and 331.

Further, the bottom face 371 of the outer intermediate indentation 37, at the first plurality of protrusions 30, extends longitudinally, in the direction of the opposite and adjacent link, beyond the bottom face 331 of the respective lateral end indentation 33.

As illustrated, the portion 16 for connecting to the other links comprises a wide main head 161, from which extends on the opposite longitudinal side of the link a pair of opposite tabs 162, 162, defining between these an opening for inserting a corresponding head of an adjacent link. The wide main head 161 of the link being designed to be inserted between the tabs of an opposite and adjacent link of the conveyor.

As illustrated, the first plurality of protrusions 30 is provided on the longitudinal side of the articulation end 161, whilst the second plurality of protrusions 20 is on the longitudinal side of the receiving tabs 162, 162.

Advantageously, at the second plurality of protrusions 20, the respective bottom 211 of the central indentation 21 extends transversely to the longitudinal direction of extension, whilst, respectively, the respective bottoms of the other indentations are inclined at corresponding angles, converging towards the opposite, adjacent link whose protrusions are received by the selfsame indentations.

More specifically, the bottom surfaces 251, 251 of the inner intermediate indentations, the bottom surfaces 271, 271 of the outer intermediate indentations and the bottom surfaces 231, 231 of the lateral indentations have corresponding angles relative to the longitudinal direction.

Advantageously, the bottom faces of the indentations of the first plurality of protrusions 30 are inclined at corresponding angles, converging towards the opposite, adjacent link whose protrusions are received by the selfsame indentations.

More specifically, the bottom surfaces 351, 351 of the inner intermediate indentations, the bottom surfaces 371, 371 of the outer intermediate indentations and the bottom surfaces 331, 331 of the lateral indentations have corresponding angles relative to the longitudinal direction.

The transversal end face of the respective protrusion extends slightly curved, convex towards the opposite and adjacent link, whilst the bottom face of the respective indentation extends slightly curved, concave towards the opposite and adjacent link.

Also, the protrusions have the respective lateral faces converging towards the opposite and adjacent link, defining corresponding indentations diverging accordingly towards the opposite and adjacent link.

The end protrusions 24, 24 of the second plurality of protrusions 20 have corresponding longitudinal parallel sides defining the edges of the link or supporting portion 14.

The supporting portion 14 is in the form of a plate which has a central part 141, substantially lozenge-shaped, from which the first and second plurality of protrusions extend longitudinally from opposite longitudinal sides of the lozenge-shaped portion.

Transversely to the articulation portion 16, corresponding pins 164 for engaging and sliding extend along respective guide means of the conveyor, in which is inserted a respective pin, in particular made of metal, for articulation to the corresponding link of the conveyor, as will become clearer as this description continues.

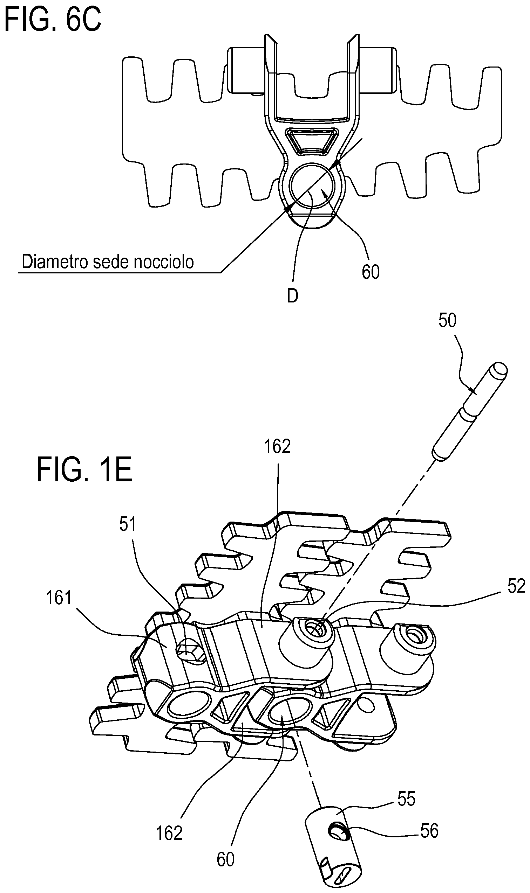

As may be clearly inferred with reference to Figure 1E, in order to articulate the links of the conveyor with each other, a pin 50, preferably made of metal, is inserted in the corresponding transversal holes 51 and 52 provided in the insertion heads and tabs for receiving the corresponding links.

For locking the articulation pin 50 in position, use is made of a locking pin 55, which is inserted in a corresponding perpendicular housing 60 opening on the inside or bottom of the insertion head, or core 161.

The housing 60 for receiving the locking pin 55 is defined by a wall, preferably cylindrical, which extends perpendicularly and inside of which opens the holes 51 transversely provided in the head, or core, 161 of the lower, or articulation part 16 of the link, for the insertion of the articulation pin 50.

More specifically, the locking pin 55 has a transversal through hole 56 into which the articulation pin 50 inserts.

Also, the link, preferably has a distance "h", of the axis of the articulation pin 50 from the lower face of the supporting portion 14 of the product, which is equal to 9.9 mm, and a transversal distance "t", between the opposite inner faces of the tabs 162, 162 for receiving the insertion head 161, which is equal to 15.4 mm.

Preferably, in order to obtain a corresponding conveyor which has a large surface for supporting the product to be conveyed and which at the same time does not require an excessive use of drive power and which is as quiet as possible, advantageously, the ratio between the width "l" of the portion 14 for supporting the product of the link and the interval, or longitudinal distance, "p" between the axes of the articulation pins 50 of the link with the adjacent links, respectively upstream and downstream, is greater than 2.91 and is preferably greater than 2.95, and is still more preferably, greater than 3. This ratio of the link is advantageously equal to 3.27.

According to the invention, in order to obtain a corresponding conveyor which has a large surface for supporting the product to be conveyed and which at the same time does not require an excessive use of drive power and which is as quiet as possible, advantageously, the ratio between the width "l" of the portion 14 for supporting the product of the link and the diameter "D" of the housing 60, receiving the lock stud 55 of the articulation pin 50 between the links, which is provided perpendicularly in the articulation end, or core 161, is greater than 7.25 and preferably greater than 8 and still more preferably greater than 8.45. This ratio of the link is advantageously equal to 9.22.

In practice, the invention provides an articulation portion 16 which has geometrical dimensions which are quite small relative to the width "l" of the upper supporting portion 14 for the product. In this way, a link is obtained which is particularly light and which requires less drive power for the conveyor belt in which it is inserted and which also makes it possible for the conveyor belt to be quieter during use, that is, during the operations for feeding the products.

Preferably, the linkhas on the supporting portion 14 of the product an insert "l", preferably made of elastomeric material, which allows a better contact with the product conveyed, in particular avoiding sliding of the product conveyed, the insert "l" being preferably made as illustrated in international patent application No. WO2013/128408 in the name of the Applicant.

The link thus has a main body, made of moulded plastic material, and a corresponding insert "l", preferably made of rubber or elastomeric material, for engaging the product conveyed, which is shaped to match the product supporting portion 14 of the main body of the link.

As may be inferred from Figures 1C, 1D, this configuration of the link, allows, both in a curved path of the conveyor belt, and in a straight path of the conveyor belt, particularly small spaces between the links of the conveyor to be obtained and advantageously such as to prevent, or reduce as much as possible, any risk of inserting parts of the product conveyed, in particular the portions of corresponding blister packs which contain the product, in particular the pharmaceutical product, as well as the fingers of personnel monitoring the plant or machine in which the conveyor is used.

The invention described has evident industrial applications.

## Claims

1. A conveyor (10) of the type with articulated links for transporting products, in a working zone, plant or industrial machine; wherein each link (12) of the conveyor comprises a portion (14) defining the product supporting surface, and a portion (16), defining corresponding means for articulation to the adjacent links; the respective product supporting portion (14) comprising a first and a second plurality of protrusions (30, 20) extending longitudinally towards opposite and adjacent links, the protrusions being separated from each other by corresponding longitudinal gaps, or indentations, (21, 31) designed to receive the corresponding protrusions of the opposite and adjacent links; wherein the first plurality of protrusions (30), or links, which face towards a respective adjacent link, in particular opposite, comprise a respective central protrusion (32) and respective and opposite first and second lateral protrusions (34); and wherein between the central protrusion (32) and each of the respective lateral protrusions (34, 34), there are corresponding first intermediate protrusions (36, 36), respectively outer, and wherein the second plurality of protrusions (20), which are directed towards a respective adjacent link, comprise a first and a second central protrusion (22, 22) and a first and a second end protrusion (24, 24) at the opposite lateral ends of the link; wherein between each of the first and second central protrusions (22, 22) and the respective lateral protrusions (24, 24) there are first intermediate protrusions (26, 26), respectively outer; and **characterized in that**:
- in the first plurality of protrusions, between the central protrusion (32) and each of the respective lateral protrusions (34, 34), there are corresponding second intermediate protrusions (38, 38), respectively inner;
- in the second plurality of protrusions, between each of the first and second central protrusions (22, 22) and the respective lateral protrusions, there are second intermediate protrusions (28, 28), respectively inner;
- the ratio between the width (I) of the product supporting portion (14) of the link to the diameter (D) of a housing (60) which receives a lock stud (55) of an articulation pin (50) and which is formed perpendicularly in an articulation end, or core (161) is greater than 7.25.

2. The conveyor according to claim 1, **characterized in that** the respective intermediate protrusion, in particular the outer and/or inner protrusion (26, 28), of the second plurality of protrusions (20), extends longitudinally beyond the corresponding lateral end protrusion (24) and/or the corresponding central protrusion (22).

3. The conveyor according to any one of the preceding claims, **characterized in that** the first and second outer and inner intermediate protrusions (26, 28) of the second plurality of protrusions (20) have respective longitudinal ends (261, 281) which are transversely paired or substantially paired with each other.

4. The conveyor according to any one of the preceding claims, **characterized in that** the respective lateral end protrusion (24) of the second plurality of protrusions (20), extends longitudinally beyond the corresponding central protrusion (242).

5. The conveyor according to any one of the preceding claims, **characterized in that** the respective central protrusion (32) of the first plurality of protrusions (30), extends longitudinally beyond the corresponding longitudinal protrusions of the selfsame first plurality of protrusions (30).

6. The conveyor according to any one of the preceding claims, **characterized in that** the outer intermediate protrusion (36) of the first plurality of protrusions (30) extends longitudinally beyond the corresponding lateral protrusion (34) and/or the corresponding inner intermediate protrusion (38).

7. The conveyor according to any one of the preceding claims, **characterized in that** the inner intermediate protrusion (38) of the first plurality of protrusions (30) extends longitudinally beyond the corresponding lateral protrusion (34).

8. The conveyor according to any one of the preceding claims, **characterized in that** the central protrusions (22, 22) of the second plurality of protrusions (20) have respective transversal end faces (221, 221) which are inclined and convergent on each other in the direction of the opposite longitudinal end of the link.

9. The conveyor according to any one of the preceding claims, **characterized in that** the receiving indentations, provided at the second plurality of protrusions (20), comprise a wide central indentation (21), provided between the corresponding central protrusions (22, 22) of the second plurality of protrusions, corresponding lateral indentations (23, 23), provided between the corresponding lateral protrusion (24) and the outer intermediate protrusion (26) of the second plurality of protrusions, and respective first intermediate indentations (25, 25) and second intermediate indentations (27, 27), respectively outer and inner, provided between the corresponding central protrusion (22) and the respective inner intermediate protrusion (28), and between the respective outer and inner intermediate protrusions (26, 28) of the second plurality of protrusions.

10. The conveyor according to any one of the preceding claims, **characterized in that** the receiving indentations provided at the first plurality of protrusions (30) comprise a first and a second central indentation (31, 31) provided between the central protrusion (32) and the corresponding inner intermediate protrusions (38, 38) of the first plurality of protrusions, corresponding lateral end indentations (33, 33) provided on the outside of the respective lateral protrusion (34, 34) of the first plurality of protrusions, and respective first intermediate indentations (35, 35) and second intermediate indentations (37, 37), respectively outer and inner, provided between the corresponding outer and inner intermediate protrusions (36, 38) and between the respective outer intermediate protrusion (38) and the corresponding lateral protrusion (34) of the first plurality of protrusions.

11. The conveyor according to any one of the preceding claims, **characterized in that** the ratio between the width (I) of the product supporting portion (14) of the link to the pitch (p), or longitudinal centre distance between the axes of the articulation pins (50) by which the link is articulated to the adjacent links, respectively upstream and downstream, is greater than 2.91, preferably greater than 2.95, and still more preferably, greater than 3.

## Patentansprüche

1. Förderer (10) des Typs mit Gelenkverbindungen zum Transportieren von Produkten, in einem Arbeitsbereich, einer Anlage oder einer Industriemaschine; wobei jedes Glied (12) des Förderers einen Abschnitt (14) aufweist, der die Produktauflagefläche definiert, und einen Abschnitt (16), der entsprechende Mittel zur Anlenkung an den benachbarten Gliedern definiert; wobei der jeweilige Produkttrageabschnitt (14) eine erste und eine zweite Vielzahl von Vorsprüngen (30, 20) aufweist, die sich in Längsrichtung zu gegenüberliegenden und benachbarten Gliedern erstrecken; wobei die Vorsprünge durch entsprechende Längsspalte oder Vertiefungen (21, 31) voneinander getrennt sind, um die entsprechenden Vorsprünge der gegenüberliegenden und benachbarten Glieder aufzunehmen; wobei die erste Vielzahl von Vorsprüngen (30), oder Gliedern, die einem jeweils benachbarten, insbesondere gegenüberliegenden Glied zugewandt sind, einen jeweiligen zentralen Vorsprung (32) und jeweilige und gegenüberliegende erste und zweite seitliche Vorsprünge (34) aufweisen; und wobei zwischen dem zentralen Vorsprung (32) und jedem der jeweiligen seitlichen Vorsprünge (34, 34) entsprechende erste Zwischenvorsprünge (36, 36) bzw. äußere Vorsprünge vorhanden sind, und wobei die zweite Vielzahl von Vorsprüngen (20), die zu einem jeweiligen benachbarten Glied gerichtet sind, einen ersten und einen zweiten zentralen Vorsprung (22, 22) und einen ersten und zweiten Endvorsprung (24, 24) an den gegenüberliegenden seitlichen Enden der Verbindung umfassen; wobei zwischen jedem der ersten und zweiten zentralen Vorsprünge (22, 22) und den jeweiligen seitlichen Vorsprüngen (24, 24) jeweils äußere erste Zwischenvorsprünge (26, 26) vorhanden sind; und **dadurch gekennzeichnet, dass**:
- in der ersten Vielzahl von Vorsprüngen, gibt es zwischen dem zentralen Vorsprung (32) und jedem der jeweiligen seitlichen Vorsprünge (34, 34) entsprechende zweite, jeweils innere, Zwischenvorsprünge (38, 38);
- in der zweiten Vielzahl von Vorsprüngen, gibt es zwischen jedem der ersten und zweiten zentralen Vorsprünge (22, 22) und den jeweiligen seitlichen Vorsprüngen, jeweils innere zweite Zwischenvorsprünge (28, 28);
- das Verhältnis zwischen der Breite (l) des produkttragenden Teils des Verbindungsglieds und dem Durchmesser (D) eines Gehäuses (60), das einen Verriegelungsbolzen (55) eines Gelenkbolzens (50) aufnimmt und das senkrecht an einem Gelenkende oder einem Kern (161) ausgebildet ist, ist größer als 7,25.

2. Förderer nach Anspruch 1, **dadurch gekennzeichnet, dass** der jeweilige Zwischenvorsprung, insbesondere der äußere und/oder innere Vorsprung (26, 28) der zweiten Vielzahl von Vorsprüngen (20), sich in Längsrichtung über den entsprechenden seitlichen Endvorsprung (24) und/oder den entsprechenden zentralen Vorsprung (24) hinaus, erstreckt.

3. Förderer nach einem der vorhergehenden Ansprüche, **dadurch gekennzeichnet, dass** der erste und zweite äußere und innere Zwischenvorsprung (26, 28) der zweiten Vielzahl von Vorsprüngen (20) jeweilige Längsenden (261, 281) besitzen, die in Querrichtung gepaart oder im Wesentlichen miteinander gepaart sind.

4. Förderer nach einem der vorhergehenden Ansprüche, **dadurch gekennzeichnet, dass** sich der jeweilige seitliche Endvorsprung (24) der zweiten Vielzahl von Vorsprüngen (20) in Längsrichtung über den entsprechenden zentralen Vorsprung (242) hinaus, erstreckt.

5. Förderer nach einem der vorhergehenden Ansprüche, **dadurch gekennzeichnet, dass** sich der jeweilige zentrale Vorsprung (32) der ersten Vielzahl von Vorsprüngen (30) in Längsrichtung über die entsprechenden Längsvorsprünge derselben ersten Vielzahl von Vorsprüngen hinaus, erstreckt.

6. Förderer nach einem der vorhergehenden Ansprüche, **dadurch gekennzeichnet, dass** sich der äußere Zwischenvorsprung (36) der ersten Vielzahl von Vorsprüngen (30) in Längsrichtung über die entsprechenden seitlichen Vorsprünge (34) und/oder den entsprechenden inneren Zwischenvorsprung (38) hinaus, erstreckt.

7. Förderer nach einem der vorhergehenden Ansprüche, **dadurch gekennzeichnet, dass** sich der innere Zwischenvorsprung (38) der ersten Vielzahl von Vorsprüngen (30) in Längsrichtung über den entsprechenden seitlichen Vorsprung (34) hinaus erstreckt.

8. Förderer nach einem der vorhergehenden Ansprüche, **dadurch gekennzeichnet, dass** die zentralen Vorsprünge (22, 22) der zweiten Vielzahl von Vorsprüngen (20) entsprechende seitliche Endvorsprünge (221, 221) aufweisen, die sind geneigt und laufen in Richtung des gegenüberliegenden Längsendes des Hebels zusammen.

9. Förderer nach einem der vorhergehenden Ansprüche, **dadurch gekennzeichnet, dass** die auf der zweiten Vielzahl von Vorsprüngen (20) angeordneten Aufnahmevertiefungen eine große zentrale Vertiefung (21) aufweisen, die zwischen den entsprechenden zentralen Vorsprüngen (22, 22) der zweiten Vielzahl von Vorsprüngen angeordnet ist, entsprechende seitliche Vertiefungen (23, 23), die zwischen dem entsprechenden seitlichen Vorsprung (24) und dem äußeren Zwischenvorsprung (26) der zweiten Vielzahl von Vorsprüngen angeordnet sind, und jeweilige erste Zwischenvertiefungen (25, 25) und zweite Zwischenvertiefungen (27, 27), jeweils außen und innen angeordnet, die zwischen dem entsprechenden zentralen Vorsprung (22) und dem jeweiligen inneren Zwischenvorsprung (28), und zwischen den jeweiligen äußeren und inneren Zwischenvorsprüngen (26, 28) der zweiten Vielzahl von Vorsprüngen, angeordnet sind.

10. Förderer nach einem der vorhergehenden Ansprüche, **dadurch gekennzeichnet, dass** die an der ersten Vielzahl von Vorsprüngen (30) angeordneten Aufnahmevertiefungen eine zweite zentrale Vertiefung (31, 31) aufweisen, die zwischen dem zentralen Vorsprung (32) und den entsprechenden inneren Zwischenvorsprüngen (38, 38) der ersten Vielzahl von Vorsprüngen angeordnet sind, entsprechende seitliche Endvertiefungen (33, 33), die an der Außenseite des jeweiligen seitlichen Vorsprunges (34, 34) der ersten Vielzahl von Vorsprüngen angeordnet sind, und entsprechende erste Zwischenvertiefungen (35, 35) und zweite Zwischenvertiefungen (37, 37), jeweils außen und innen angeordnet, die zwischen den entsprechenden äußeren und inneren Zwischenvorsprüngen (36, 36) und zwischen dem jeweiligen äußeren Zwischenvorsprung (38) und dem entsprechenden seitlichen Vorsprung (34) der ersten Vielzahl von Vorsprüngen, angeordnet sind.

11. Förderer nach einem der vorhergehenden Ansprüche, **dadurch gekennzeichnet, dass** das Verhältnis zwischen der Breite (1) des Trägerteils des Produkts (14) des Hebels und der Teilung (p) oder der Mittellängsabstand zwischen den Achsen der Schwenkzapfen (50), mit denen der Hebel an den benachbarten Hebeln angelenkt ist, jeweils stromaufwärts und stromabwärts, größer als 2,91, vorzugsweise größer als 2,95 und noch bevorzugter größer als 3 ist.

## Revendications

1. Convoyeur (10) du type à liens articulés pour le transport de produits, dans une zone de travail, une usine ou une machine industrielle; dans lequel chaque lien (12) du convoyeur comprend une partie (14) définissant la surface de support du produit, et une partie (14) définissant des moyens correspondants pour l'articulation sur les liens adjacents; la partie de support de produit (14) respective comprenant une première et une deuxième pluralité de saillies (30, 20) s'étendant longitudinalement vers des liens opposées et adjacentes; les protubérances étant séparées les unes des autres par des intervalles longitudinaux correspondants, ou des empreintes (21, 31), destinées à recevoir les protubérances correspondantes des liens opposés et adjacents; dans lequel la première pluralité de saillies (30) ou de liens, qui font face à un lien adjacent respectif, en particulier opposé, comprend une saillie centrale respective (32) et des premières et deuxièmes saillies latérales (34) respectives et opposées; et dans lequel, entre la saillie centrale (32) et chacune des saillies latérales (34, 34) respectives, se trouvent des premières saillies intermédiaires (36, 36) correspondantes, respectivement extérieures, et dans lequel la deuxième pluralité de saillies (20), qui sont dirigées vers un lien adjacent respectif, comprennent une première et une deuxième saillie centrale (22, 22) et une première et une seconde deuxième saillie d'extrémité (24, 24) sur les extrémités latérales opposées du lien; et dans lequel entre chacune des premières et deuxièmes saillies centrales (22, 22) et les saillies latérales respectives (24, 24) il y a des premières saillies intermédiaires (26, 26), respectivement extérieures; et **caractérisé en ce que**:
- dans la première pluralité de saillies, entre la saillie centrale (32) et chacune des saillies latérales (34, 34) respectives, il y a des deuxièmes saillies intermédiaires (38, 38) correspondantes, respectivement internes;
- dans la deuxième pluralité de saillies, entre chacune des premières et deuxièmes saillies centrales (22, 22) et les saillies latérales respectives, il y a des deuxièmes saillies intermédiaires (28, 28), respectivement intérieures;
- le rapport entre la largeur (l) de la partie de support du produit (14) du lien et le diamètre (D) d'un logement (60) qui reçoit un goujon de blocage (55) d'un pivot d'articulation (50) et qui est formé perpendiculairement à une extrémité d'articulation, ou à un noyau, est supérieur à 7,25.

2. Convoyeur selon la revendication 1, **caractérisé en ce que** la saillie intermédiaire respective, en particulier la saillie externe et/ou interne de la deuxième pluralité de saillies 20), s'étend longitudinalement au-delà de la saillie d'extrémité latérale (24) correspondante et/ou de la saillie centrale (22) correspondante.

3. Convoyeur selon l'une quelconque des revendications précédentes, **caractérisé en ce que** les première et deuxièmes saillies intermédiaires externes et internes (26, 28) de la deuxième pluralité de saillies (20) ont des extrémités longitudinales respectives (261, 281) qui sont appariées transversalement ou sensiblement appariées l'une à l'autre.

4. Convoyeur selon l'une quelconque des revendications précédentes, **caractérisé en ce que** la saillie d'extrémité latérale respective (24) de la deuxième pluralité de saillies (20) s'étend longitudinalement au-delà de la saillie centrale correspondante (242).

5. Convoyeur selon l'une quelconque des revendications précédentes, **caractérisé en ce que** la saillie centrale respective (32) de la première pluralité de saillies (30) s'étend longitudinalement au-delà des saillies longitudinales correspondantes de la même première pluralité de saillies (30).

6. Convoyeur selon l'une quelconque des revendications précédentes, **caractérisé en ce que** la saillie intermédiaire externe (36) de la première pluralité de saillies (30) s'étend longitudinalement au-delà de la saillie latérale correspondante (34) et/ou de la saillie intermédiaire interne correspondante (38).

7. Convoyeur selon l'une quelconque des revendications précédentes, **caractérisé en ce que** la saillie intermédiaire interne (38) de la première pluralité de saillies (30) s'étend longitudinalement au-delà de la saillie latérale correspondante (34).

8. Convoyeur selon l'une quelconque des revendications précédentes, **caractérisé en ce que** les saillies centrales (22, 22) de la deuxième pluralité de saillies (30) ont des respectives surfaces d'extrémité transversales (221, 221), qui sont inclinés et convergeant l'une sur l'autre dans la direction de l'extrémité longitudinale opposée du lien.

9. Convoyeur selon l'une quelconque des revendications précédentes, **caractérisé en ce que** les empreintes de réception, fournies à la deuxième pluralité de saillies (20), comprennent une large empreinte centrale (21), fournie entre les correspondantes saillies centrales (22, 22) de la deuxième pluralité d'empreintes (23, 23), fournies entre la correspondante saillie latérale (24) e la saillie intermédiaire externe (26) de la deuxième pluralité de saillies, et des respectives premières empreintes intermédiaires (25, 25) et des deuxièmes empreintes intermédiaires (27, 27), respectivement externes et internes, fournies entre la correspondante empreinte centrale (22) et les respectives saillies intermédiaires externes et internes (26, 28) de la deuxième pluralité de saillies.

10. Convoyeur selon l'une quelconque des revendications précédentes, **caractérisé en ce que** les empreintes de réception fournies sur la première pluralité de saillies (30) comprennent une première et une deuxième empreinte centrale (31, 31) fournies entre la saillie centrale (32) et la correspondante saillie intermédiaire interne (38, 38) de la première pluralité de saillies, des correspondantes empreintes d'extrémité latérales (33, 33) fournies à l'extérieur de la respective saillie latérale (34, 34) de la première pluralité de saillies, et des respectives premières empreintes intermédiaires (35, 35) et des deuxièmes empreintes intermédiaires (37, 37), respectivement externes et internes, fournies entre les correspondantes saillies intermédiaires externes et internes (36, 38) et entre la respective saillie intermédiaire externe (38) et la correspondante saillie latérale (34) de la première pluralité de saillies.

11. Convoyeur selon l'une quelconque des revendications précédentes, **caractérisé en ce que** le rapport entre la largeur (l) de la partie de support du produit (14) du lien et le pas (p), ou distance centrale longitudinale entre les axes des pivots articulés (50), par lesquels le lien est articulé aux liens adjacents, à mont et aval, è supérieure à 2,91, préférablement supérieure à 2,95, et encore plus préférablement, supérieure à 3.
